# EUROPEAN PATENT APPLICATION

(11) **EP 2 200 291 A2**
(43) Date of publication of application: **23.06.2010**
(21) Application number: 09168382.1
(22) Date of filing: 21.08.2009
(51) Int. Cl.: H04N 5/60, H04N 5/445

(54) **Image processing apparatus and method of controlling the same**

(30) Priority: 19.12.2008 KR 20080129982
(71) Applicant: SAMSUNG ELECTRONICS CO., LTD., Suwon-si Gyeonggi-do 442-742 (KR)
(72) Inventor: Lee, Young-jin, Suwon-si (KR)
(74) Representative: Waddington, Richard

(57) **Abstract**

An image processing apparatus includes: a receiving unit which receives a broadcasting signal; an image processing unit which processes and outputs an image; an audio processing unit which processes and outputs audio and audio description; and a controller which, if an audio description function is set, controls the audio processing unit to apply an audio processing method for a first audio description scheme on a preferential basis between the audio processing method for the first audio description scheme, which mixes and broadcasts audio and audio description in a broadcasting station, and an audio processing method for a second audio description scheme, which mixes audio and audio description transmitted from a broadcasting station in the image processing apparatus. With this configuration, it is possible to determine audio priority by selecting an Audio Description (AD) Premix function on a preferential basis.

## Description

### BACKGROUND OF INVENTION

### 1. Field of Invention

Apparatuses and methods consistent with the present invention relate to an image processing apparatus and a method of controlling the same, and more particularly, to an image processing apparatus and a method of controlling the same, which are capable of determining audio priority by selecting an Audio Description (AD) Premix function on a preferential basis.

### 2. Description of the Related Art

Audio Description (AD) refers to adding detailed description to audio for persons with visual impairments. If an audio description function is set, in general, when a broadcasting station broadcasts two audio streams, TV mixes and outputs these two audio streams.

However, since different televisions (TVs) have different limitations and policies, broadcasting stations have been first premixing and then broadcasting two audio streams in recent years, and in addition, a corresponding digital video broadcasting (DVB) standard is being established. If this function is established in the DVB standard, an existing standard of selecting an audio language based on a priority is changed. Accordingly, in consideration of this, there is a need for a new standard of determining an output language of audio.

### SUMMARY OF THE INVENTION

Exemplary embodiments of the present invention address the above disadvantages and other disadvantages not described above. Also, the present invention is not required to overcome the disadvantages described above, and an exemplary embodiment of the present invention may not overcome any of the problems described above.

Aspects of the present invention will be set forth in part in the description which follows and, in part, will be obvious from the description, or may be learned by practice of the present invention.

According to the present invention there is provided an apparatus and method as set forth in the appended claims. Other features of the invention will be apparent from the dependent claims, and the description which follows.

According to an aspect of the present invention, there is provided an image processing apparatus and a method of controlling thereof, which are capable of determining audio priority by selecting an Audio Description (AD) Premix function on a preferential basis.

According to another aspect of the present invention, there is provided an image processing apparatus including: a receiving unit which receives a broadcasting signal; an image processing unit which processes and outputs an image; an audio processing unit which processes and outputs audio and audio description; and a controller which, if an audio description function is set, controls the audio processing unit to apply an audio processing method for a first audio description scheme on a preferential basis between the audio processing method for the first audio description scheme, which mixes and broadcasts audio and audio description in a broadcasting station, and an audio processing method for a second audio description scheme, which mixes audio an d audio description transmitted from a broadcasting station in the image processing apparatus.

In the image processing apparatus, the controller may control the audio processing unit to apply the audio processing method for the first audio description scheme or the audio processing method for the second audio description scheme according to priority of a set output language. In the image processing apparatus, if languages of the first audio description scheme and the second audio description scheme do not correspond to the set output language, the controller may control the audio processing unit to apply an audio processing method for a third audio description scheme which mixes and broadcasts the audio and the audio description without setting a language of the audio description in the broadcasting station. In the image processing apparatus, the controller may control the audio processing unit to output audio inquiring a user whether to apply the audio processing method for the third audio description scheme according to the set output language. In the image processing apparatus, if the user refuses to apply the audio processing method for the third audio description scheme according to the set output language, the controller may control the audio processing unit to output only audio without the audio description. In the image processing apparatus, the controller may control the audio processing unit to output the audio according to priority of the set output language. In the image processing apparatus, if the language of the audio does not correspond to the set output language, the controller may control the audio processing unit to output the audio according to a first-entered audio language. In the image processing apparatus, if the audio description function is not set, the controller may control the audio processing unit to output only the audio and exclude the audio description. In the image processing apparatus, the controller may control the audio processing unit to output the audio according to priority of the se t output language. In the image processing apparatus, if the output language according to priority does not correspond to the audio language, the controller may control the audio processing unit to apply an audio processing method for a third audio description scheme.

According to another aspect of the present invention, there is provided a control method of an image processing apparatus, including: receiving a broadcasting signal; if an audio description function is set, applying an audio processing method for a first audio description scheme on a preferential basis between the audio processing method for the first audio description scheme, which mixes and broadcasts audio and audio description in a broadcasting station, and an audio processing method for a second audio description scheme, which mixes audio an d audio description transmitted from a broadcasting station in the image processing apparatus; and processing and outputting the audio and the audio description according to the audio processing method for the first audio description scheme or the audio processing method for the second audio description scheme.

The control method may further include applying the audio processing method for the first audio description scheme or the audio processing method for the second audio description scheme according to priority of a set output language. The control method may further include, if languages of the first audio description scheme and the second audio description scheme do not correspond to the set output language, applying an audio processing method for a third audio description scheme which mixes and broadcasts the audio and the audio description without setting a language of the audio description in the broadcasting station. The control method may further include outputting audio inquiring a user whether to apply the audio processing method for the third audio description scheme according to the set output language. The control method may further include, if the user refuses to apply the audio processing method for the third audio description scheme according to the set output language, outputting only audio without the audio description. The control method may further include outputting the audio according to priority of the set output language. The control method may further include, if the language of the audio does not correspond to the set output language, outputting the audio according to a first-entered audio language. The control method may further include, if the audio description function is not set, outputting only the audio and excluding the audio description. The control method may further include outputting the audio according to priority of the set output language. The control method may further include, if the output language according to priority does not correspond to the audio language, applying an audio processing method for a third audio description scheme.

### BRIEF DESCRIPTION OF THE DRAWINGS

The above and/or other aspects of the present invention will become apparent and more readily appreciated from the following description of exemplary embodiments, taken in conjunction with the accompanying drawings, in which:
FIG. 1 is a view showing a configuration of an image processing apparatus according to an exemplary embodiment of the present invention.
FIG. 2A is a view showing an example of a language descriptor according to an exemplary embodiment of the present invention.
FIG. 2B is a view showing an example of a language descriptor according to a first audio description scheme according to an exemplary embodiment of the present invention.
FIG. 2C is a view showing an example of a language descriptor according to a second audio description scheme according to an exemplary embodiment of the present invention.
FIG. 2D is a view showing an example of a language descriptor according to a third audio description scheme according to an exemplary embodiment of the present invention.
FIG. 3 is a view showing a control process of an image processing apparatus according to a first exemplary embodiment of the present invention.
FIGs. 4A and 4B are views showing a control process of an image processing apparatus according to a second exemplary embodiment of the present invention.
FIG. 5 is a view showing a control process of an image processing apparatus according to a third exemplary embodiment of the present invention.

### DETAILED DESCRIPTION OF EXEMPLARY EMBODIMENTS OF THE INVENTION

Hereinafter, reference will now be made in detail to embodiments of the present invention, examples of which are illustrated in the accompanying drawings, so that those skilled in the art can easily practice the present invention. The present invention is not limited to the exemplary embodiments disclosed herein bu t may be implemented in different forms. In the following exemplary embodiments, for the purpose of clarity, the same or similar components are denoted by the same reference numerals throughout t h e drawings, and explanation thereof will not be repeated.

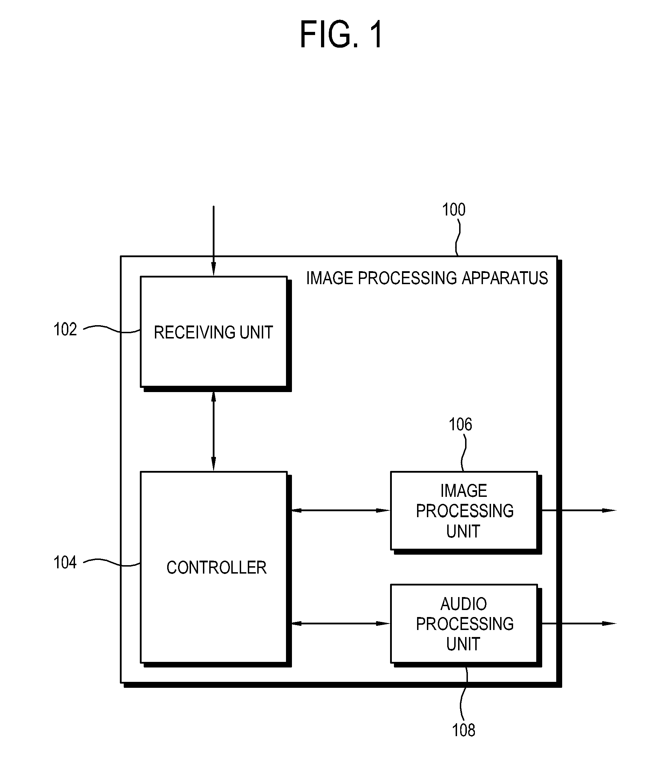

FIG. 1 is a view showing a configuration of an image processing apparatus according to an exemplary embodiment of the present invention.

An image processing apparatus 100 according to an exemplary embodiment of the present invention may include, for example, a digital TV, a set-top box, a desktop computer, a notebook computer, a Digital Versatile Disc (DVD) player, a mobile terminal, a Personal Digital Assistant (PDA), or any electronic device as long as it can receive and process a broadcasting signal including audio data.

In an exemplary embodiment, the image processing apparatus 100 may include a receiving unit 102, a controller 104, an image processing unit 106 and an audio processing unit 108.

The receiving unit 102 receives a broadcasting signal. The broadcasting signal may include audio data and audio description data. Audio Description (AD) may include audible detailed description added to audio for people with visual impairments. When an audio description function is set, two audio streams are mixed and outputted in general.

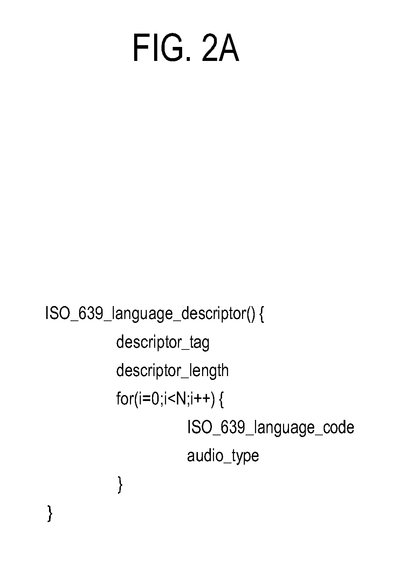

Depending on a subject which mixes two audio streams or whether or not a broadcasting language is set, audio description may be classified into a first audio description scheme, a second audio description scheme and a third audio description scheme. Details of the first to third audio description schemes will be described later with reference to FIGs. 2A to 2D.

The controller 104 determines whether or not an audio description function is set and processes audio description by applying an audio description scheme according to a set priority.

According to a first exemplary embodiment of the present invention, when an audio description function is set, the controller 104 may control the audio processing unit 108 to apply an audio processing method for the first audio description scheme on a preferential basis between the audio processing method for the first audio description scheme, which mixes and broadcasts audio and audio description in a broadcasting station, and an audio processing method for the second audio description scheme, which mixes audio and audio description transmitted from a broadcasting station in the image processing apparatus 100.

In this case, according to the set priority of output language, the controller 104 may control the audio processing unit 108 to apply the audio processing method for the first audio description scheme or the audio processing method for the second audio description scheme.

According to a second exemplary embodiment of the present invention, when an audio description function is set, if languages of the first audio description scheme and the second audio description scheme do not correspond to the set output language, the controller 104 may control the audio processing unit 108 to apply the audio processing method for the third audio description scheme, which mixes and broadcasts the audio and audio description without setting a language of audio and audio description in a broadcasting station.

In this case, according to the set output language, the controller 104 may control the audio processing unit 108 to output audio inquiring a user whether to apply the audio processing method for the third audio description scheme.

If a user refuses to apply the audio processing method for the third audio description scheme according to the set output language, the controller 104 may control the audio processing unit 108 to output only audio without audio description. In this case, according to priority of the set output language, the controller 104 may control the audio processing unit 108 to output audio. In addition, if an audio language does not correspond to the set output language, the controller 104 may control the audio processing unit 108 to output audio according to a language of a first-entered audio.

On the other hand, when an audio description function is not set, the controller 104 may control the audio processing unit 108 to output only audio and excluding audio description. In this case, the controller 104 may control the audio processing unit 108 to output audio according to priority of the set output language.

According to a third exemplary embodiment of the present invention, if an audio description function is not set and if an output language according to priority does not correspond to an audio language, the controller 104 may control the audio processing unit 108 to apply the audio processing method for the third audio description scheme.

The image processing unit 106 processes and outputs an image. To this end, the image processing unit 106 may further include a Liquid Crystal Display (LCD), an Organic Light Emitting Display (OLED), a Plasma Display Panel (PDP), etc.

The audio processing unit 108 processes and outputs audio and audio description. Specifically, the audio processing unit 10 8 may process audio description according to an audio processing method of an audio description scheme which is preferentially applied in each exemplary embodiment of the present invention.

FIG. 2A is a view showing an example of a language descriptor.

A language descriptor shown in FIG. 2A complies with ISO 639, which is an international standard of a language name. The language descriptor includes a broadcasting language of audio and information on an audio type. In addition, the language descriptor may include information on an audio description scheme.

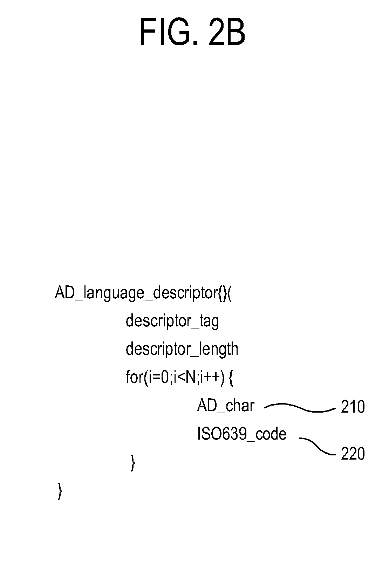

FIG. 2B is a view showing an example of a language descriptor according to the first audio description scheme.

The first audio description scheme is a scheme for premixing and broadcasting audio and audio description in a broadcasting station. In this case, a broadcasting language of audio and audio description is set in the first audio description scheme. In a broadcasting station, when audio is premixed with audio description, an audio description descriptor is created to indicate audio description an d a current broadcasting language. Referring to FIG. 2B, an audio description descriptor includes information 210 of AD and information 220 on a current broadcasting language.

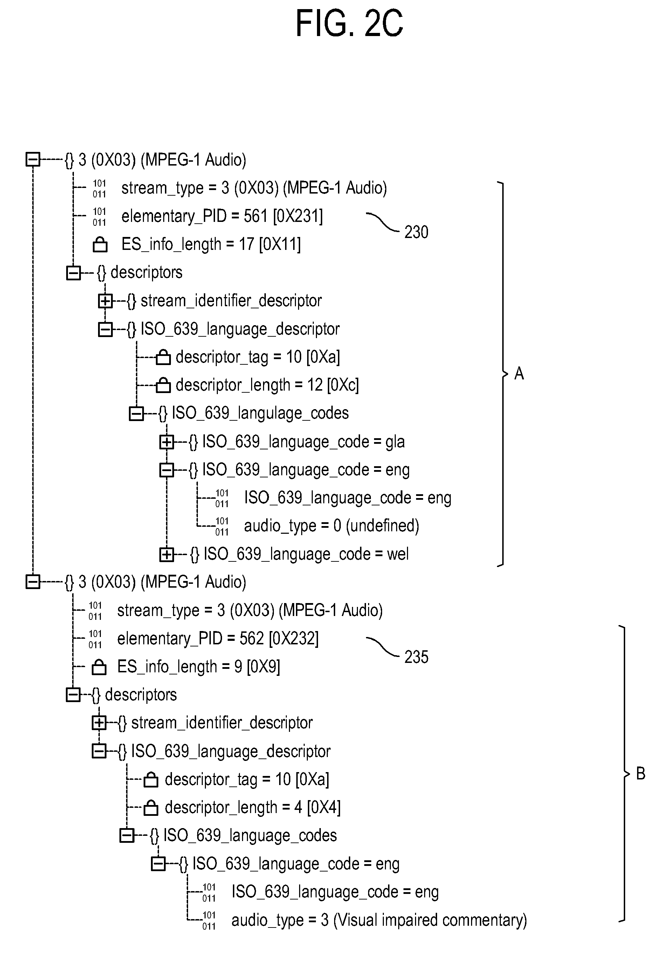

FIG. 2C is a view showing an example of a language descriptor according to the second audio description scheme.

The second audio description scheme is a scheme for postmixing audio and audio description transmitted from a broadcasting station in the image processing apparatus 100. In this case, broadcasting languages of audio and audio description are individually set in the second audio description scheme. If a broadcasting station broadcasts audio data (A) including a language descriptor and audio description data (B) including a language descriptor, the image processing apparatus 200 mixes and outputs the audio and the audio description. Specifically, according to a predefined rule, the image processing apparatus 200 may match a packet ID of audio data with a packet ID of audio description data and output audio and audio description corresponding to respective packet IDs simultaneously. For example, in FIG. 2C, audio (A) whose packet ID is 561 and audio description (B) whose packet ID is 562 are simultaneously output.

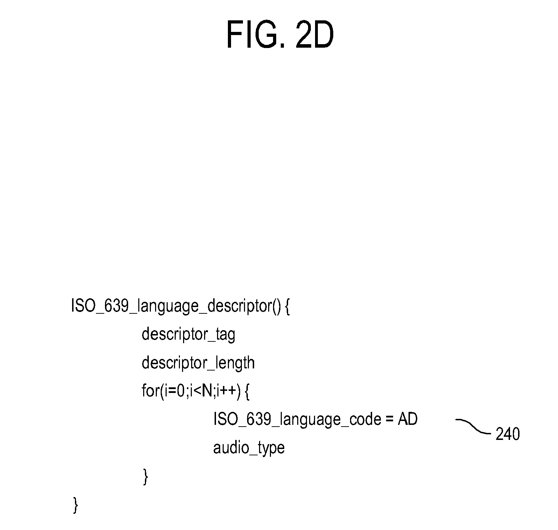

FIG. 2D is a view showing an example of a language descriptor according to the third audio description scheme.

The third audio description scheme is a scheme for premixing and broadcasting audio and audio description in a broadcasting station without setting a language of the audio and the audio description (unknown language). Unlike the above-mentioned first and second audio description schemes, the third audio description scheme is not set with a language of audio and audio description. In a broadcasting station, when audio is mixed with audio description, a language code value included in a language descriptor is set as AD to indicate audio description. Referring to FIG. 2D, a language descriptor includes a language code value 240 set as AD. This indicates that the audio description can be processed according to the third audio description scheme.

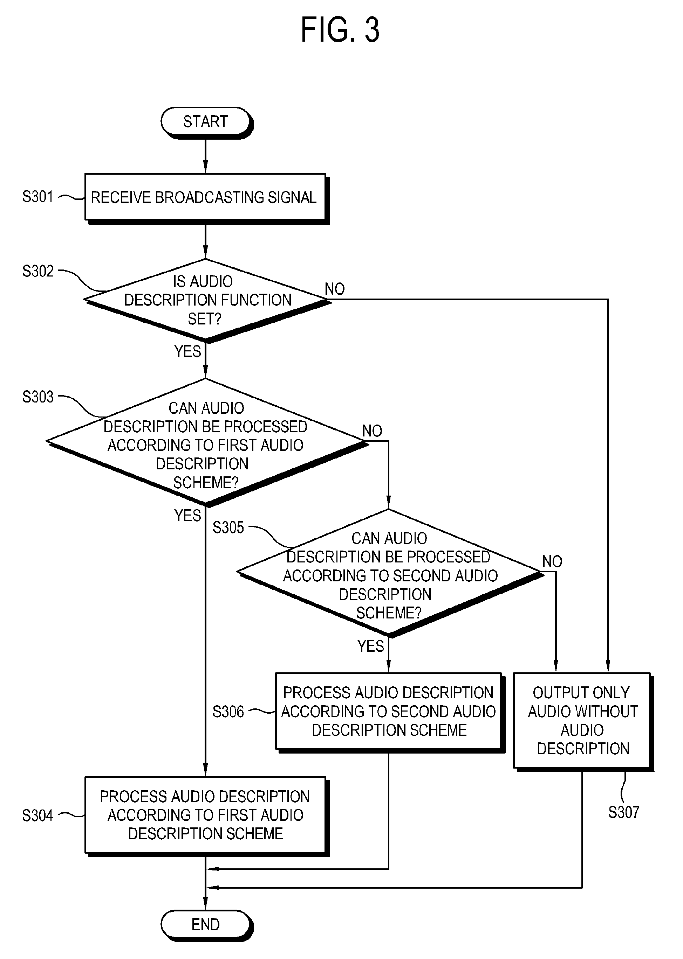

FIG. 3 is a view showing a control process of an image processing apparatus according to a first exemplary embodiment of the present invention.

According to a first exemplary embodiment of the present invention, when an audio description function is set, the image processing apparatus 100 may apply an audio processing method for the first audio description scheme preferentially between an audio processing method for the first audio description scheme, which mixes and broadcasts audio and audio description in a broadcasting station, and an audio processing method fo r th e second audio description scheme, which mixes audio an d audio description broadcasted from a broadcasting station in the image processing apparatus.

The image processing apparatus 100 receives a broadcasting signal (S301). I n this case, the broadcasting signal may include audio data and audio description data. In addition, the broadcasting signal may include data by the first audio description scheme, data by the second audio description scheme and data by the third audio description scheme all together at the same time.

The image processing apparatus 100 determines whether or not an audio description function is set (S302). If an audio description function is no t se t , th e image processing apparatus 100 outputs only audio without audio description (S307).

If an audio description function is set, the image processing apparatus 100 determines whether or not audio description can be processed according to the first audio description scheme (S303). If audio description can be processed according to the first audio description scheme, the image processing apparatus 100 processes audio description according to the audio processing method for the first audio description scheme (S304).

On the other hand, if it is determined in operation S303 that audio description cannot be processed according to the first audio description scheme, the image processing apparatus 100 determines whether or not audio description can be processed according to the second description scheme (S305).

In operations S303 and S305, in consideration of various conditions, it may be determined whether or not audio description can be processed according to the first audio description scheme or the second audio description scheme. For example, the image processing apparatus 100 may determine whether or not a broadcasting language of the first audio description scheme matches priority of a set output language. In the image processing apparatus 100, priorities of output languages according to user's preference are set. Accordingly, if the set output language is different from a broadcasting language set in the first audio description scheme, audio description cannot be processed according to the first audio description scheme.

In this case, if it is determined that audio description can be processed according to the second audio description scheme, the image processing apparatus 100 processes audio description according to the audio processing method for the second audio description scheme (S306).

On the other hand, if it is determined in operation S305 that audio description cannot be processed according to the second audio description scheme, the image processing apparatus 100 outputs only audio without audio description (S307). Specifically, if a language does not correspond to this scheme or a corresponding language is not present, the image processing apparatus 100 outputs audio according to a scheme for outputting ordinary audio. For example, the image processing apparatus 100 may output audio according to priority of the set output language. In addition, if a language corresponding to a language of audio is not present in priority of the set output language, audio may be outputted with a language of a first-inputted audio.

The first audio description scheme, which mixes and broadcasts audio and audio description in a broadcasting station, has an advantage over the second audio description scheme, which mixes audio an d audio description transmitted from a broadcasting station in the image processing apparatus. For example, in order to process audio description according to the second audio description scheme, formats of audio and audio description have to be equal to each other. In addition, it is difficult to synchronize audio with audio description, making use restrictive. According to the first exemplary embodiment of the present invention, when an audio description function is set, the first audio description scheme is preferentially applied and preferred over the second audio description scheme. Accordingly, it is possible to serve an audio description function according to better environments.

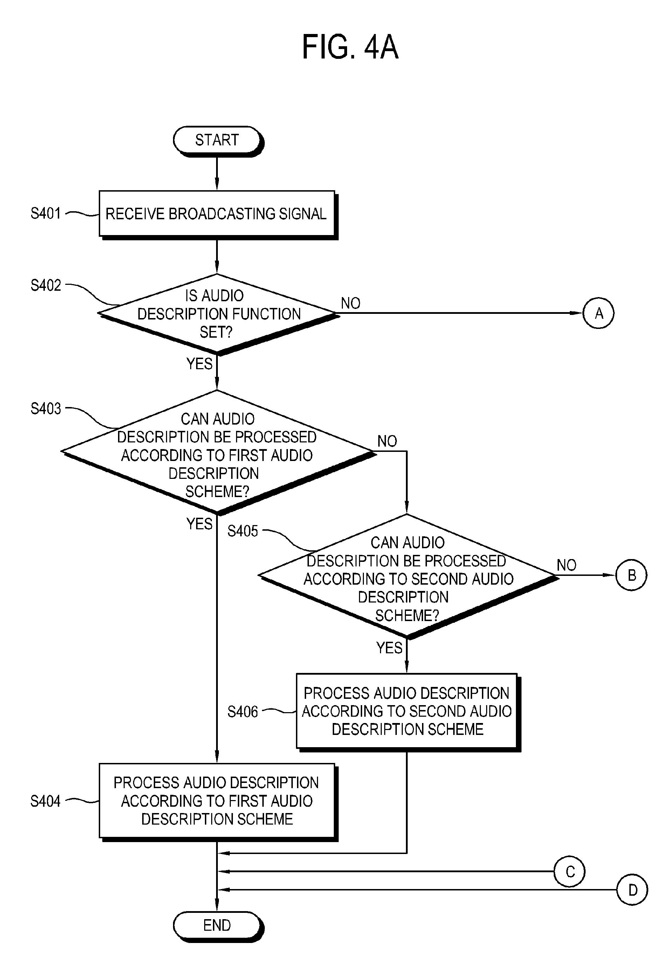

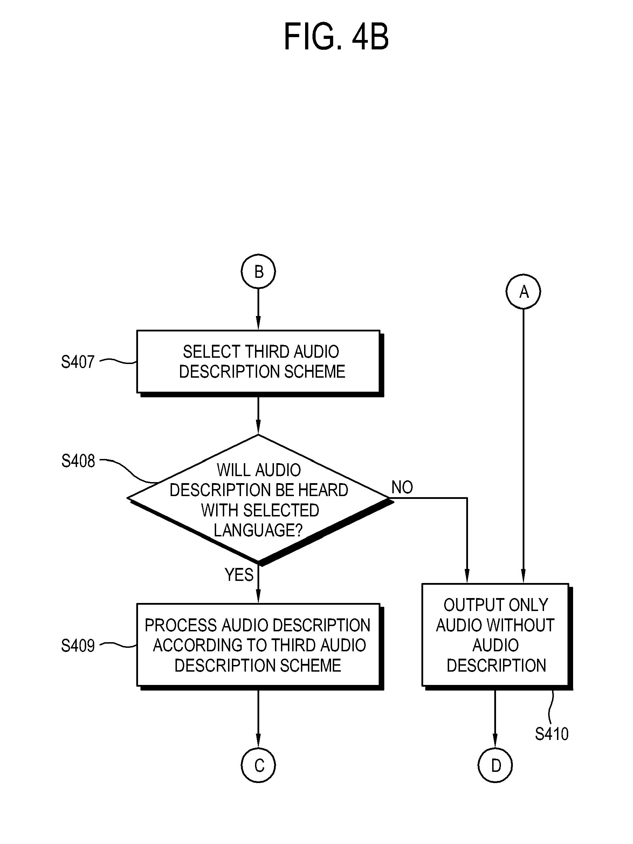

FIGs. 4A and 4B are views showing a control process of an image processing apparatus according to a second exemplary embodiment of the present invention.

According to a second exemplary embodiment of the present invention, if an audio description function is set and if languages of the first and second audio description schemes do not correspond to the set output language, the image processing apparatus 100 may apply an audio processing method of the third audio description scheme, which mixes and broadcasts audio and audio description without setting languages of the audio and the audio description in a broadcasting station.

Upon receiving a broadcasting signal (S401), the image processing apparatus 100 determines whether or not an audio description function is set (S402). If an audio description function is not set, the image processing apparatus 100 performs operation S410 to output only audio without audio description (S410).

If an audio description function is set, the image processing apparatus 100 determines whether or not audio description can be processed according to the first audio description scheme (S403). If audio description can be processed according to the first audio description scheme, the image processing apparatus 100 processes audio description according to an audio processing method for the first audio description scheme (S404).

On the other hand, if it is determined in operation S403 that audio description cannot be processed according to the first audio description scheme, the image processing apparatus 100 determines whether or not audio description can be processed according to the second audio description scheme (S405). In this case, if it is determined that audio description can be processed according to the second audio description scheme, the image processing apparatus 100 processes audio description according to an audio processing method for the second audio description scheme (S406).

On the other hand, if it is determined in operation S405 that audio description cannot be processed according to the second audio description scheme, the image processing apparatus 100 selects the third audio description scheme (S407). In this case, the image processing apparatus 100 outputs audio inquiring a user whether to hear audio description with a selected language (S408).

If the user accepts to hear audio description with the selected language, the image processing apparatus 100 processes the audio description according to the audio processing method for the third audio description scheme (S409). On the other hand, if the user refuses to hear audio description with the selected language, only audio is output without audio description (S410). Specifically, audio corresponding to priority of the output language set in the image processing apparatus 100 may be selected and output.

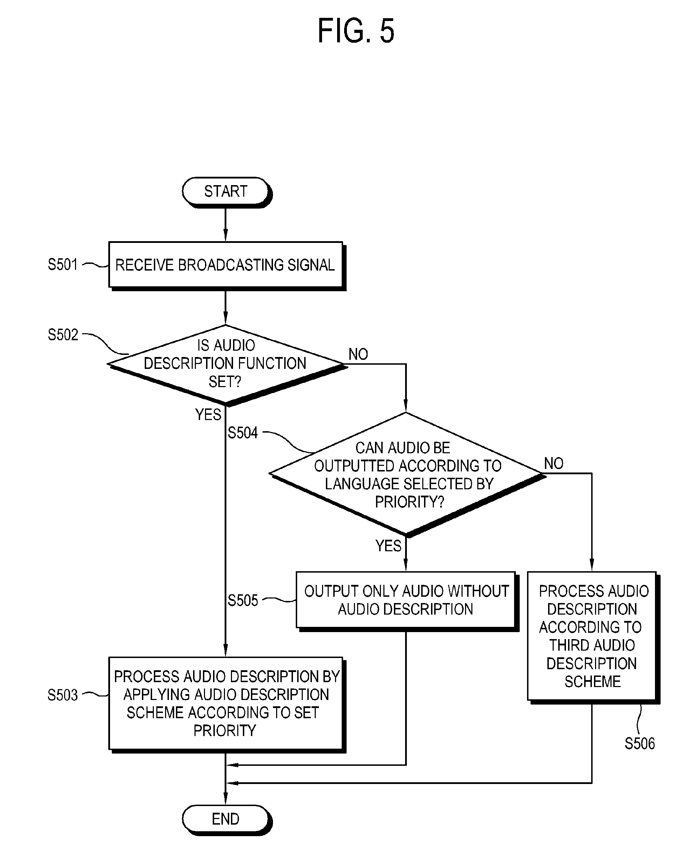

FIG. 5 is a view showing a control process of an image processing apparatus according to a third exemplary embodiment of the present invention.

According to a third exemplary embodiment of the present invention, if an audio description function is not set and if an output language according to priority does not correspond to a language of audio, the image processing apparatus 100 may apply the third audio description scheme.

Upon receiving a broadcasting signal (S501), the image processing apparatus 100 determines whether or not an audio description function is set (S502). If an audio description function is set, the image processing apparatus 100 applies an audio description scheme according to set priority to process audio description (S503). Specifically, audio description can be processed in order of the first audio description scheme, the second audio description scheme and the third audio description scheme.

If it is determined in operation S502 that an audio description function is not set, the image processing unit 100 determines whether or not audio can be output according to a language selected by priority (S504). If audio can be output according to the language selected by priority, the image processing apparatus 100 outputs only audio without audio description (S505). Specifically, while only audio is output without audio description, audio conforming to a standard of priority (ex: Primary/Secondary/default) of the set output language may be selected and output.

If it is determined in operation S504 that audio cannot be output according to a language selected by priority, the image processing apparatus 100 processes audio description according to the audio processing method for the third audio description scheme (S506).

According to the third exemplary embodiment of the present invention, if an audio description function is not set, audio is output based on priority (Primary/Secondary language) set by a user. In this case, if audio corresponding to priority is not present, audio description is set according to the audio processing method fo r th e third audio description scheme. Accordingly, it is possible for the user to optimally hear audio description corresponding to a language set by the user.

Although a few exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including an y accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in th i s specification (including any accompanying claims, abstract and drawings), or to any novel one, or any novel combination, of the steps of any method or process so disclosed.

## Claims

1. An image processing apparatus comprising:
a receiving unit which receives a broadcasting signal;
an image processing unit which processes and outputs an image;
an audio processing unit which processes and outputs an audio and an audio description; and
a controller which, if an audio description function is set, controls the audio processing unit to apply an audio processing method for a first audio description scheme on a preferential basis between the audio processing method for the first audio description scheme, which mixes and broadcasts the audio and the audio description in a broadcasting station prior to transmission of the audio and the audio description from the broadcasting station to the image processing apparatus, and an audio processing method for a second audio description scheme, which mixes the audio and the audio description transmitted from the broadcasting station in the image processing apparatus.

2. The image processing apparatus according to claim 1, wherein the controller controls the audio processing unit to apply the audio processing method for the first audio description scheme or the audio processing method for the second audio description scheme according to priority of a set output language.

3. The image processing apparatus according to claim 2, wherein, if languages of the first audio description scheme and the second audio description scheme do not correspond to the set output language, the controller controls the audio processing unit to apply an audio processing method for a third audio description scheme which mixes and broadcasts the audio and the audio description without setting a language of the audio and the audio description in the broadcasting station.

4. The image processing apparatus according to claim 3, wherein the controller controls the audio processing unit to output audio inquiring a user whether to apply the audio processing method for the third audio description scheme according to the set output language.

5. The image processing apparatus according to claim 4, wherein, if the user refuses to apply the audio processing method for the third audio description scheme according to the set output language, the controller controls the audio processing unit to output only audio without the audio description.

6. The image processing apparatus according to claim 5, wherein the controller controls the audio processing unit to output the audio according to the priority of the set output language.

7. The image processing apparatus according to claim 6, wherein, if the language of the audio does not correspond to the set output language, the controller controls the audio processing unit to output the audio according to a first-entered audio language.

8. The image processing apparatus according to any preceding claim, wherein, if the audio description function is not set, the controller controls the audio processing unit to output only the audio without the audio description.

9. The image processing apparatus according to claim 8, wherein the controller controls the audio processing unit to output the audio according to priority of a set output language.

10. The image processing apparatus according to claim 9, wherein, if the output language according to the priority of the set output language does not correspond to an audio language of the audio, the controller controls the audio processing unit to apply an audio processing method for a third audio description scheme.

11. A control method of an image processing apparatus, comprising:
receiving a broadcasting signal;
if an audio description function is set, applying an audio processing method for a first audio description scheme on a preferential basis between the audio processing method for the first audio description scheme, which mixes and broadcasts an audio and an audio description in a broadcasting station prior to transmission of the audio and the audio description from the broadcasting station to the image processing apparatus, and an audio processing method for a second audio description scheme, which mixes the audio and the audio description transmitted from the broadcasting station in the image processing apparatus; and
processing and outputting the audio and the audio description according to the audio processing method for the first audio description scheme or the audio processing method for the second audio description scheme.

12. The control method according to claim 11, further comprising applying the audio processing method for the first audio description scheme or the audio processing method for the second audio description scheme according to priority of a set output language.

13. The control method according to claim 12, further comprising, if languages of the first audio description scheme and the second audio description scheme do not correspond to the set output language, applying an audio processing method for a third audio description scheme which mixes and broadcasts the audio and the audio description without setting a language of the audio and the audio description in the broadcasting station.

14. The control method according to claim 13, further comprising outputting audio inquiring a user whether to apply the audio processing method for the third audio description scheme according to the set output language.

15. The control method according to claim 14, further comprising, if the user refuses to apply the audio processing method for the third audio description scheme according to the set output language, outputting only audio without the audio description.
